# EUROPEAN PATENT APPLICATION

(11) **EP 4 170 239 A1**
(43) Date of publication of application: **26.04.2023**
(21) Application number: 22202956.3
(22) Date of filing: 21.10.2022
(51) Int. Cl.: F24C 3/08, F24C 15/32, A21B 1/14

(54) **GAS FIRED COOKING OVEN**

(30) Priority: 22.10.2021 IT 202100027137
(71) Applicant: Coven Societa' A Responsabilita' Limitata, 10146 Torino (TO) (IT)
(72) Inventor: D'URSI, Francesco, 10146 Torino (TO) (IT)
(74) Representative: Brunacci, Marco

(57) **Abstract**

The firing kiln (1) comprises:
- at least one firing chamber (3) defining at least one access opening (2) for the insertion and/or extraction of at least one product to be fired into/from the same firing chamber;
- at least one heat assembly (4), arranged inside the firing chamber (3) and adapted to heat it;
wherein the heat assembly (4) comprises:
- combustion heating means (9), provided with at least one combustion chamber (6) of at least one fuel for the production of at least one combustion smoke adapted to heat the firing chamber (3);
- steam heating means (70), provided with at least one evaporation chamber (7) of at least one working liquid for the production of steam adapted to heat the firing chamber (3).

## Description

### Technical Field

The present invention relates to a firing kiln, for firing food with hot air and/or steam, in community, industrial and home kitchens.

### Background Art

This particular category of kiln is referred to as "mixed" kilns because they provide the option of firing food by convection cooking and/or steaming.

As is well known, these kilns can use the produced steam in indirect or direct form.

In the first case, the kiln is provided with independent steam production means (water heater-boiler) which are placed outside the firing chamber and, when water is brought to the boiling point in the water heater, the steam is conveyed into the firing chamber of the kiln.

In the second case, steam is generated directly in the firing chamber by means of water dispensing means on the heating elements, such as electric heating elements or heat exchangers, which are heated by the smokes at temperature from gaseous fuel burners.

In a third case, the kiln is provided both with independent steam production means (water heater-boiler) and with water dispensing means on the heating elements, wherein both systems operate alternately or simultaneously, depending on the firing requirements, to produce steam within the firing chamber.

In this regard, it is specified that, all convection kilns require heat sources to heat the volume of air within the firing chamber and consequently to achieve food firing.

Indirect steam production is preferred to direct steam production, as it allows firing with saturated steam at a constant temperature below 100°C, while direct steam production, having to take advantage of the heating elements of the firing chamber to spray water, produces steam defined as overheated at temperatures above 100°C. In addition, in low-temperature firing, e.g. below 70°C, in direct steam versions, the water that is dispensed to the heating elements of the firing chamber, is not completely transformed into steam and as a result there is an excessive concentration of water within the chamber itself and that adversely affects firing quality.

In the kilns of known type, the air is heated by means of the same electric heaters or heat exchangers provided with gaseous fuel burners, usually natural gas or liquefied petroleum gas (LPG).

A fan, around which heat exchangers or heating elements are wrapped, moves the air in the chamber in a way that promotes uniform firing.

Most kilns of the known type using electricity to produce heat employ circular heating elements formed by several branches in the shape of concentric circles a few millimeters apart from each other.

The use of electrically powered circular heating elements makes it possible to occupy relatively small spaces with respect to the total size of a firing chamber. Such kilns of known type have the main drawback related to the high electrical power consumption at the expense of energy savings.

In addition, in a professional kitchen there is a considerable increase in the electrical power committed and consequently the cost of electrical systems.

By using electricity during direct steaming, moreover, the useful surface area to spray water is very small and thus the production of large amounts of steam in a short time is not promoted.

In this case, the heating elements cool down when they are hit by water and the quality of steam is thus affected.

Known kilns using exchangers fed by gaseous fuel burners employ three types of burners:
- atmospheric, wherein the comburent air is naturally drawn in through a mixer exploiting the Venturi effect;
- premixed blown, with or without metal fiber, wherein the comburent air is produced by a fan and forcibly mixed in a mixer upstream of the burner;
- non-premixed blown, wherein the combustible fluid is drawn from a related duct without mixing it with the comburent fluid and wherein the union between the combustible fluid and the comburent fluid occurs at the time of flame formation.

It is well known that burners of blown type are preferable to atmospheric burners because of their better thermal efficiency, resulting in lower fuel consumption and avoiding unnecessary heat loss.

In addition, blown burners can achieve much higher heat powers and are safer than atmospheric ones with respect to the danger of carbon monoxide poisoning.

All burners are properly connected to a heat exchanger within the firing chamber, where a fan promotes heat exchange.

Mixed kilns of known type are offered with at least two independent heat assemblies, one to heat the firing chamber and the other separate to generate steam.

To produce indirect steam, mixed kilns use water heaters and boiler steam generators which are separate from the firing chamber heating system and provided with further heating elements placed inside an evaporation chamber, into which a certain amount of water is fed which, when brought to a boiling point, generates steam.

Gaseous fuel-supplied steam generators are provided with burners that, by means of combustion smokes flowing inside exchangers, bring water to a boiling point to generate steam.

In the case of electrically powered steam generators, on the other hand, there are electric heating elements immersed in the evaporation chamber into which the water used to generate steam is fed.

Kilns are also known to use the combustion smokes from the burner that heats the firing chamber exchanger to heat a further exchanger located inside the boiler to produce steam.

This type of kiln does however have some drawbacks.

The main drawback of these kilns is that they cannot cook only with low-temperature steam, as well as the use of long times for steam production and the consequent impairment of thermal efficiency and firing quality.

All of these known kilns have the additional drawback of the complexity and high implementation costs due to the use of two separate heat exchange assemblies with their control and regulation devices, as well as systems that allow the deflection of combustion products from the heat exchange assembly, used to heat the firing chamber, to the one used inside the boiler to produce steam.

In order to reduce the complexity and number of devices used in gas-fired mixed kilns, kilns are offered that use a burner provided with a single flame to heat the firing chamber, while a boiler using electric heating elements immersed in water is used to produce steam, with high electrical power consumption at the expense of energy savings and maintenance costs.

### Description of the Invention

The main aim of the present invention is to devise a firing kiln which allows, selectively or in combination, convection cooking and steaming.

One object of the present invention is to devise a firing kiln which can produce steam both directly and indirectly.

An additional object of the present invention is to devise a firing kiln with small overall dimensions.

Another object of the present invention is to devise a firing kiln which allows reducing energy consumption and maximizing the production output of the kiln itself, while reducing its environmental impact compared with kilns of known type.

Another object of the present invention is to devise a firing kiln which allows the mentioned drawbacks of the prior art to be overcome within the framework of a simple, rational, easy and effective to use as well as inexpensive solution. The aforementioned objects are achieved by this firing kiln having the characteristics of claim 1.

### Brief Description of the Drawings

Other characteristics and advantages of the present invention will become more apparent from the description of a preferred, but not exclusive, embodiment of a firing kiln, illustrated by way of an indicative, yet non-limiting example, in the attached tables of drawings in which:

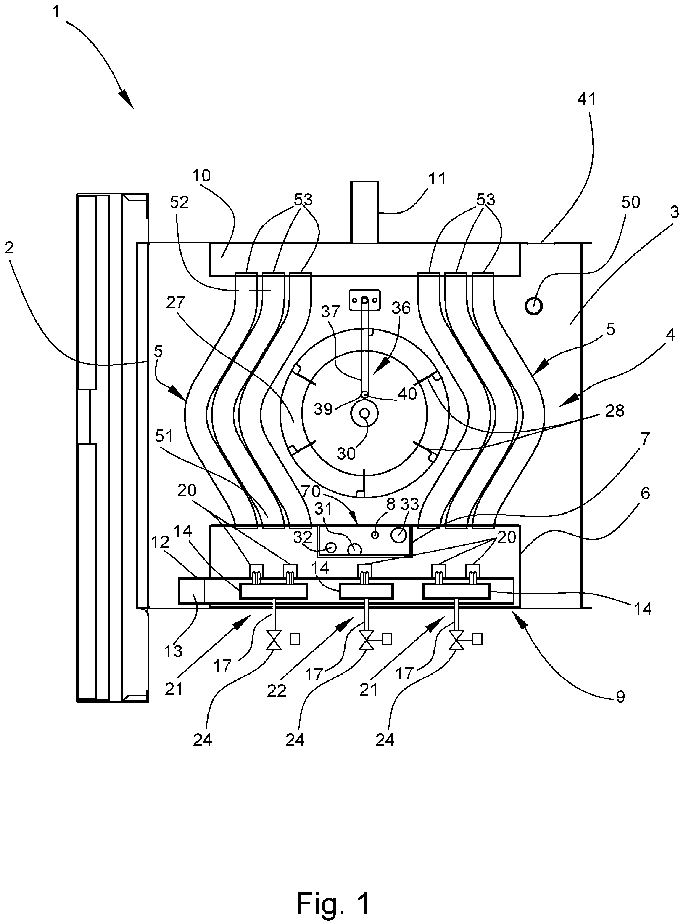

Figure 1 is a sectional view of the firing kiln according to the invention;

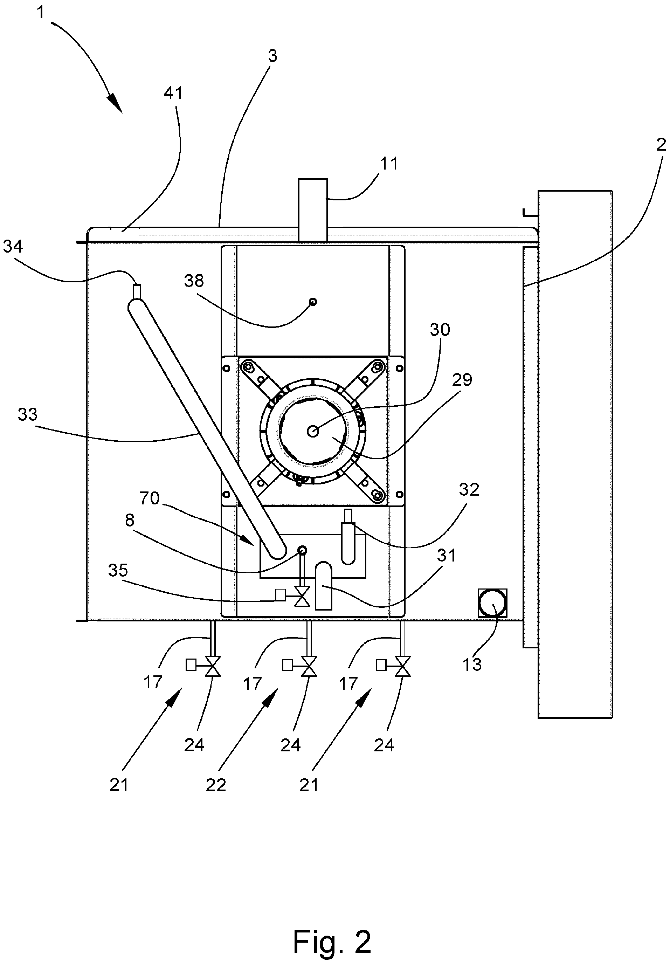

Figure 2 is a side view of the firing kiln according to the invention;

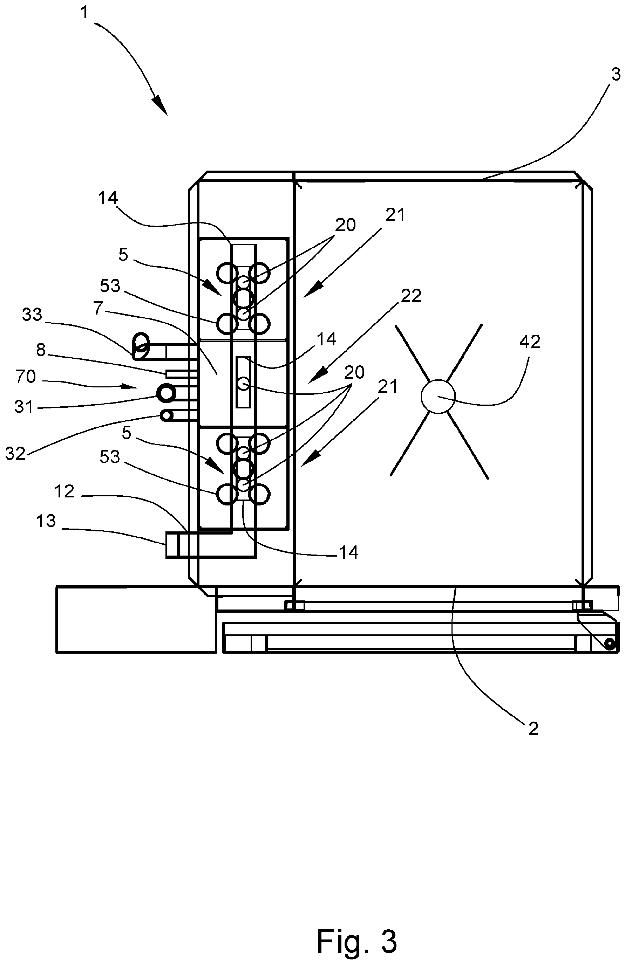

Figure 3 is a top sectional view of the firing kiln according to the invention;

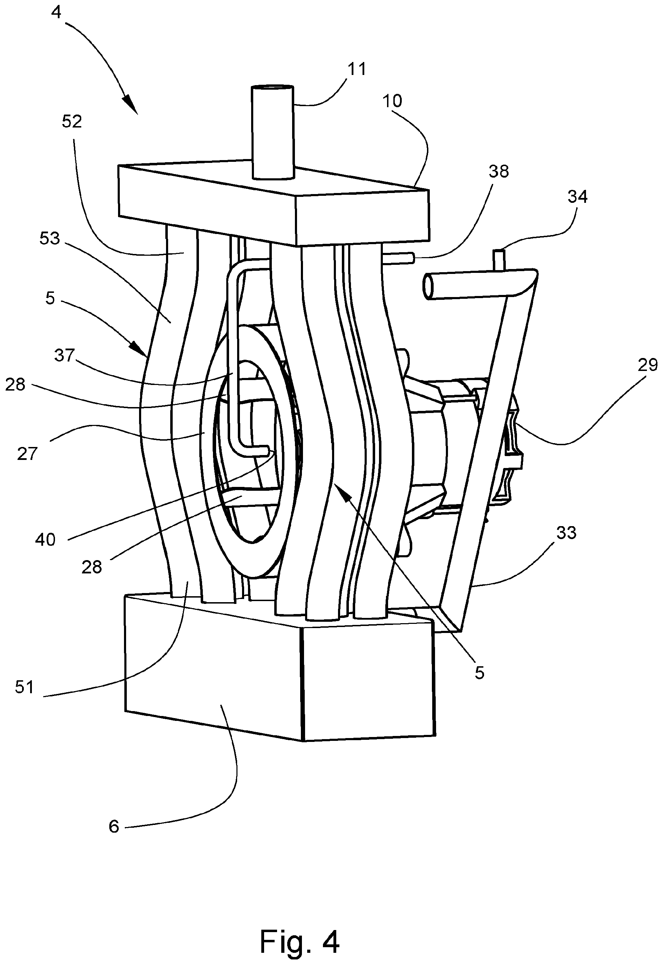

Figure 4 is a perspective view of a detail of the heat assembly of the firing kiln according to the invention.

### Embodiments of the Invention

With particular reference to these figures, reference numeral 1 globally denotes a firing kiln.

The firing kiln 1 comprises:
- at least one firing chamber 3 defining at least one access opening 2 for the insertion and/or extraction of at least one product to be fired into/from the same firing chamber;
- at least one heat assembly 4, arranged inside the firing chamber 3 and adapted to heat the same.

Specifically, the heat assembly 4 comprises:
- combustion heating means 9, provided with at least one combustion chamber 6 of at least one fuel for the production of at least one combustion smoke adapted to heat the firing chamber 3;
- steam heating means 70, provided with at least one evaporation chamber 7 of at least one working liquid for the production of steam adapted to heat the firing chamber 3.

Advantageously, the evaporation chamber 7 is located inside the combustion chamber 6.

In the preferred embodiment of the kiln 1, the heat assembly 4 comprises heat exchange means 5 provided with at least one conveying body 53, connected in a fluid-operated manner to the combustion chamber 6 to convey the combustion smoke through the firing chamber 3, and made of a thermally conductive material to transmit the heat of the combustion smoke to the firing chamber 3. In addition, the kiln 1 comprises dispensing means 36, arranged inside the firing chamber 3 and adapted to pour water onto the conveying body 53, so as to produce direct steam for the firing inside the firing chamber itself.

Advantageously, the dispensing means 36 comprise an outlet opening 40 adapted to pour water onto the heat exchange means 5 to generate steam in direct form as well. The water dispensing means 36 may operate alternately or simultaneously, depending on firing requirements, with the steam production system generated by the steam heating means 70. In addition, the dispensing means 36 are of the type of a pipe 37 having a first end 38 for supplying water and a second end 39 provided with the outlet opening 40, through which water is conveyed at the heat exchange means 5 thus generating steam in a direct form.

Usefully, heat exchange means 5 are arranged inside the firing chamber 3 alongside at least one fan 27 that generates convective motion and keeps air moving during firing.

Preferably, the lower end 51 of the conveying body 53 feeds into the combustion chamber 6 and the upper end 52 is connected to a collector 10 collecting the combustion products, generated by the combustion heating means 9.

Preferably, the conveying body 53 is a tubular body.

An alternative embodiment cannot be ruled out wherein the firing chamber 3 comprises coupling means arranged at the connection between the combustion heating means 9 and the heat exchange means 5.

The possibility cannot be ruled out of connecting a duct 11, connected to the collector 10, to an impeller for the forced extraction of the combustion smokes flowing in the heat exchange means 5, so as to increase heating uniformity and consequently thermal efficiency.

Advantageously, the heat exchange means 5 comprise a plurality of conveying bodies 53 which substantially surround, at least partly, the fan 27.

An electric motor 29 operatively connected to the fan 27, by means of the shaft 30, provides for the rotation of the fan itself around an axis of rotation, the motor 29 being arranged outside the firing chamber 3.

The fan 27 adapted to heat the atmosphere of the firing chamber 3 and to keep the air moving within the firing chamber itself can preferably rotate clockwise or counterclockwise.

The steam heating means 70 comprise a working liquid supply duct 8 for steam production, a working liquid discharge duct 31, level control means 32 of the working liquid, and a duct 33 which conveys the steam into the firing chamber 3 through the opening 50. The duct 33 is provided with a probe 34 that detects humidity and temperature and sends an electrical signal, to a logic unit, of known type and which operatively controls the kiln, so as to maintain steam production stable and constant.

The level control means 32 operate in conjunction with valve means 35 that intercept the working liquid supply duct 8 and can be connected to the water mains.

The working fluid is preferably water.

Conveniently, the heat assembly 4 comprises at least one of:
- at least one combustion burner assembly 21 operable to develop at least one flame adapted to produce the combustion smoke; and
- at least one evaporation burner assembly 22 operable to develop at least one flame adapted to heat the evaporation chamber 7 to produce the steam, and comprising:
   each burner assembly 21, 22 comprising:
   - at least one burner head 20, placed inside the combustion chamber 6 and adapted to generate the flame;
   - at least one collector body 14, operatively connected to the burner head 20 and adapted to house the fuel to feed the flame.

In this way, the evaporation burner assembly 22 provides for the heating of the evaporation chamber 7.

Usefully, the collector bodies 14 are arranged inside the combustion chamber 6 and isolated from the inlet channel 12 in a fluid-operated manner. Conveniently, the heat assembly 4 comprises an inlet channel 12 adapted to supply the heads 20 with air necessary to feed the flame.

Advantageously, the inlet channel 12 supplies air to the heads 20 by means of an impeller of known type, not shown in these tables, and connected to the aperture 13.

The heads 20 generate flames arranged vertically on the same axis as the heat exchange means 5. The heads 20 of the burner assemblies 21 generate the combustion smokes flowing through the heat exchange means 5 which, by convective motion generated by the fan 27, heat the firing chamber 3.

The combustion smokes of the burner assemblies 21, 22, are evacuated from the heat exchange means 5 and the exhaust collector 10 by means of the duct 11. Means of ignition and flame presence detection of known type are arranged in the proximity of the burner heads 20 so as to ignite the flames and detect the presence thereof.

Advantageously, the burner head 20 of the evaporation burner assembly 22 is placed in the proximity of the evaporation chamber 7, so as to allow the flame to evaporate the working liquid.

This form of heating of the evaporation chamber 7, directly with the temperature of the flame, allows steam to be produced substantially instantaneously for the benefit of energy saving and thermal efficiency of the kiln. In addition, in this way, there is no need for accumulation and pre-heating forms of the working liquid used for evaporation.

Appropriately, the burner head 20 of the evaporation burner assembly 22 is spaced away from the evaporation chamber 7.

Advantageously, the kiln 1 comprises inlet means 17 connected to one or more of the collector elements 14 in a fluid-operated manner to supply the latter with fuel.

In particular, the inlet means 17 are configured to adjust the inflow of fuel supplied to each of the collector elements 14. Preferably, the inlet means 17 are configured to adjust the inflow of fuel supplied to each of the collector elements 14 in a selective manner.

Conveniently, the kiln 1 comprises control means 24 configured to operate one or more of the burner assemblies 21, 22.

Preferably, the control means 24 are configured to operate one or more of the burner assemblies 21, 22 in a selective manner.

Preferably, the control means 24 are configured to adjust the power of the combustion heating means 9 and the operation of the burner assemblies 21, 22 by appropriately choking the fuel and comburent air flow rates.

During a steaming process, the burner assemblies 21 will remain off, while the evaporation burner assembly 22 will be on and the flame generated by at least one burner head 20 will heat the working fluid of the evaporation chamber 7.

It should be noted that the evaporation burner assembly 22, adapted to heat the evaporation chamber 7, is provided with at least one head 20 that generates the heat necessary to transform the working liquid into steam, without generating a deviation of temperature of the firing chamber 3 and the temperature set-point set by the user during steaming. This is made possible by the fact that the evaporation burner assembly 22 provides for the heating of the evaporation chamber 7 directly with the flame temperature and is configured so that the power can be modulated. Thus steam will be generated substantially instantaneously and the flame at low operating powers will remain on for small intervals of time.

According to the invention, the heat assembly 4 comprises at least two combustion burner assemblies 21 and at least one evaporation burner assembly 22 positioned between the two combustion burner assemblies 21.

It cannot be ruled out that the firing chamber 3 comprise a baffle element that divides the firing chamber itself into a heat exchange area and a firing area within which, by means of the same, hot air and/or steam are distributed more evenly.

It cannot, however, be ruled out that the firing chamber 3 comprise at least one upper opening 41, arranged at the upper wall of the firing chamber itself for the evacuation of excess vapors during firing, and a lower opening 42, arranged at the lower wall of the firing chamber itself for the discharge of condensate or water used for washing.

It has in practice been ascertained that the described invention achieves the intended objects.

In particular, the fact is emphasized that the combustion heating means and the steam heating means allow convection cooking and steaming.

In addition, the control means allow, selectively or in combination thereof, convection cooking and steaming.

In addition, the steam heating means and the dispensing means allow steam to be produced either indirectly or directly.

Advantageously, the mutual arrangement of the combustion chamber and of the evaporation chamber allows reducing the kiln's overall dimensions.

Conveniently, the burner assemblies allow reducing energy consumption and maximizing the production output, thus reducing the environmental impact compared with the gas appliances of known type.

## Claims

1. Firing kiln (1), comprising:
- at least one firing chamber (3) defining at least one access opening (2) for the insertion and/or extraction of at least one product to be fired into/from the same firing chamber;
- at least one heat assembly (4), arranged inside said firing chamber (3) and adapted to heat it;
**characterized by** the fact that said heat assembly (4) comprises:
- combustion heating means (9), provided with at least one combustion chamber (6) of at least one fuel for the production of at least one combustion smoke adapted to heat said firing chamber (3);
- steam heating means (70), provided with at least one evaporation chamber (7) of at least one working liquid for the production of steam adapted to heat said firing chamber (3).

2. Kiln (1) according to claim 1, **characterized by** the fact that said evaporation chamber (7) is arranged inside said combustion chamber (6).

3. Kiln (1) according to one or more of the preceding claims, **characterized by** the fact that said heat assembly (4) comprises at least one of:
- at least one combustion burner assembly (21) operable to develop at least one flame adapted to produce the combustion smoke; and
- at least one evaporation burner assembly (22) operable to develop at least one flame adapted to heat the evaporation chamber (7) to produce the steam, and comprising:
each burner assembly (21, 22) comprising:
- at least one burner head (20), placed inside said combustion chamber (6) and adapted to generate the flame;
- at least one collector body (14), operatively connected to said burner head (20) and adapted to house the fuel to feed the flame.

4. Kiln (1) according to one or more of the preceding claims, **characterized by** the fact that the burner head (20) of said evaporation burner assembly (22) is placed in the proximity of said evaporation chamber (7), so as to allow the flame to evaporate the working liquid.

5. Kiln (1) according to one or more of the preceding claims, **characterized by** the fact that said heat assembly (4) comprises an inlet channel (12) adapted to supply said heads (20) with the air necessary to feed the flame.

6. Kiln (1) according to one or more of the preceding claims, **characterized by** the fact that said collector bodies (14) are arranged inside said combustion chamber (6) and isolated from said inlet channel (12) in a fluid-operated manner.

7. Kiln (1) according to one or more of the preceding claims, **characterized by** the fact that it comprises inlet means (17), connected in a fluid-operated manner to one or more of said collector elements (14) to supply the latter(s) with fuel, said inlet means (17) being configured to adjust the inflow of fuel supplied to each of said collector elements (14).

8. Kiln (1) according to one or more of the preceding claims, **characterized by** the fact that it comprises control means (24) configured to operate one or more of said burner assemblies (21, 22).

9. Kiln (1) according to one or more of the preceding claims, **characterized by** the fact that said heat assembly (4) comprises at least two combustion burner assemblies (21) and at least one evaporation burner assembly (22) positioned between said two combustion burner assemblies (21).

10. Kiln (1) according to one or more of the preceding claims, **characterized by** the fact that:
- said heat assembly (4) comprises heat exchange means (5) provided with at least one conveying body (53), connected in a fluid-operated manner to said combustion chamber (6) to convey the combustion smoke through said firing chamber (3), and made of a thermally conductive material to transmit the heat of the combustion smoke to said firing chamber (3);
- it comprises dispensing means (36), arranged inside said firing chamber (3) and adapted to pour water onto said conveying body (53), so as to produce steam for the firing inside the firing chamber itself.
